# EUROPÄISCHE PATENTSCHRIFT

(11) **EP 1 370 375 B1**
(45) Veröffentlichungstag und Bekanntmachung des Hinweises auf die Patenterteilung: **29.06.2005**
(21) Anmeldenummer: 02712868.5
(22) Anmeldetag: 30.01.2002
(51) Int. Cl.: B21B 31/07, F16J 15/447

(54) **DICHTUNGSVORRICHTUNG FÜR WALZENLAGER**
SEALING DEVICE FOR CYLINDER BEARINGS
DISPOSITIF D'ETANCHEIFICATION DESTINE A DES PALIERS DE CYLINDRE

(30) Priorität: 20.03.2001 DE 10113593
(43) Veröffentlichungstag der Anmeldung: 17.12.2003
(73) Patentinhaber: SMS Demag Aktiengesellschaft, 40237 Düsseldorf (DE)
(72) Erfinder: KELLER, Karl, 57271 Hilchenbach (DE); ROEINGH, Konrad, 57271 Hilchenbach (DE)
(74) Vertreter: Valentin, Ekkehard
(86) Internationale Anmeldenummer: PCT/EP2002/000915
(87) Internationale Veröffentlichungsnummer: WO 2002/074461

(56) Entgegenhaltungen:
- GB-A- 1 308 098
- US-A- 4 435 096
- US-A- 4 679 801
- PATENT ABSTRACTS OF JAPAN vol. 2000, no. 01, 31. Januar 2000 (2000-01-31) & JP 11 267721 A (HITACHI LTD), 5. Oktober 1999 (1999-10-05)

## Beschreibung

Die Erfindung betrifft eine Dichtungsvorrichtung für Lager einer Walze, die Walzenzapfen und einen Walzenballen aufweist, bei welcher ein drehfest mit dem Walzenzapfen verbindbarer Ringansatz eine ringförmige Dichtfläche trägt, mit der ein elastisches, stationäres Dichtungselement zusammenwirkt, und wobei dem Dichtungselement im eingebauten Zustand zum Walzenballen hin ein Dichtungslabyrinth vorgeordnet ist.

Derartige Dichtungsvorrichtungen sind aus der US-A-4 435 096 insbesondere für Ölfilmlager seit langem bekannt. Hier werden regelmäßig aufwendige Dichtungselemente eingesetzt, die einerseits verhindern sollen, dass das Öl aus dem Ölfilmlager zum Walzenballen hin gelangen, und die andererseits verhindem sollen, dass das teilweise mit Sinter versetzte Kühl- und Schmiermittel von den Walzenballen in das Ölfilmlager eindringen kann. Das Dichtungslabyrinth verhindert nur unzureichend, dass mit Sinter versetztes Kühl- und Schmiermittel zu den teuren und aufwendigen Dichtungselementen gelangt, so dass die Dichtungselemente durch den Sinter über gebühr beansprucht werden.

Neben den mit stationären Dichtelementen ausgestatteten Lagern sind auch Lager bekannt, bei denen die Dichtelemente mit dem Walzenzapfen verbunden sind, d. h. Dichtelemente umlaufen und sich gegen stationäre Dichtflächen anlegen. Auch hier werden aufwendige Dichtringe verwendet, um die notwendige Abdichtung zwischen der Walzen- und der Lagerseite herzustellen.

Der Erfindung liegt die Aufgabe zugrunde, eine gattungsgemäße Dichtungsvorrichtung so weiterzubilden, dass trotz einfacher und kostengünstiger Dichtungselemente eine gute Dichtwirkung erreicht wird, wobei die Standzeiten der Dichtung gegenüber den bekannten Dichtungsvorrichtungen vergrößert sein soll, wodurch sich die gesamte Dichtvorrichtung kostengünstiger darstellt.

Zur Lösung dieser Aufgabe wird vorgeschlagen, dass das Labyrinth aus stationären und andererseits aus mit der Walze durch einen im Schnitt im wesentlichen C-förmig ausgebildeten, mit der Stirnseite der Walze gedichtet verbundenen Ring besteht, in dessen C-förmige Öffnung ein stationärer, ringförmiger Abschlussdeckel eintaucht so dass ein mehrfach umgelenkter Labyrinthweg entsteht, wobei der ringförmige Abschlussdeckel außenseitig, und nach außen offen eine Abflussnut aufweist, wobei die Labyrinthöffnung vom Boden der Abflussnut entfernt angeordnet ist, wobei der ringförmige Abschlußdeckel einen Fortsatz aufweist, dessen Außenseite eine Umlenkung des Labyrinthweges bewirkt und dessen Innenseite eine Halterung für das stationäre Dichtungselement aufweist wobei der innere Schenkel des C-förmigen Ringes auf seiner dem mindestens einen innenliegenden und nach innen offenen Ablaufkanal aufweisenden ringförmigen Abschlussdeckel zugewandten Seite eine gegenüberliegende Nut aufweist, wobei der innere Schenkel des C-förmigen Rings an seiner, dem Fortsatz zugewandten Seite angeschrägt ist, so dass sich der innere Schenkel zu seiner freien Spitze hin verjüngt, und wobei der Fortsatz an seinem Ende einen das Labyrinth verengenden Ansatz aufweist.

Das Dichtungslabyrinth bewirkt dabei die walzenseitige Abdichtung des Lagers, während das Dichtungselement nur noch die lagerseitige Abdichtung gewährleisten muss. Damit sind aufwendig gestaltete Dichtelemente, die in beiden Richtungen abzudichten vermögen, überflüssig.

Die große Menge des von der Walzenoberfläche abfließenden Kühl- und Schmiermittels gelangt zunächst auf eine Seite eines dachförmigen Abweisers. Durch die Drehbewegung des dachförmigen Abweisers gelangt das Kühl- und Schmiermittel bis zur Spitze des Daches, wo die größte Umfangsgeschwindigkeit herrscht. Hier wird der Großteil des Kühl- und Schmiermittels abgeschleudert. Überflüssiges Kühl- und Schmiermittel müsste auf der zweiten Dachhälfte gegen die Fliehkraft in Richtung auf das Lager wandern. Die Fliehkraft bewirkt jedoch, dass auch das auf der zweiten Dachhälfte befindliche Kühl- und Schmiermittel zur Dachspitze transportiert wird. Der größte Teil des nicht über den dachförmigen Abweiser abgeschleuderten Kühl- und Schmiermittels wird in der Abflussnut gefangen und von dieser zu einem Tank abgeführt.

Es können jedoch trotzdem Kühl- und Schmiermittelreste in das Dichtungslabyrinth gelangen. Sobald die Tropfen mit dem rotierenden Teil des Dichtungslabyrinths in Berührung kommen, würden diese aufgrund der Fliehkräfte nach außen transportiert. Lediglich die Tropfen, die sich am feststehenden Teil des Dichtungslabyrinths sammeln, würden im ersten Labyrinthbereich abtropfen und auf die Schenkel des C-förmigen Ringes gelangen, von wo aus das Kühl- und Schmiermittel durch die Fliehkraft nach außen befördert wird.

Im weiteren Verlauf des Labyrinths wird noch immer vorhandenes Kühl- und Schmiermittel auf der Innenseite des inneren Schenkels des C-förmigen Rings in einer Nut aufgefangen und von dort zu dem bzw. den Ablaufkanälen transportiert. In den Ablaufkanälen können sich die Tröpfchen sammeln und fließen zur tiefsten Stelle des Kanals, wo das Kühl- und Schmiermittel durch die Auslassöffnungen aus dem Labyrinthbereich zur Abflussnut abfließen kann.

Das Labyrinth macht durch den Fortsatz einen weiteren Knick. Auch hier sind die rotierenden Elemente des Labyrinths so geformt, dass Kühl- und Schmiermittelreste durch die Fliehkraft in die Ablaufkanäle gefördert werden.

Am Ende des Labyrinthweges weist der Fortsatz einen Ansatz auf, der den Labyrinthweg stark verengt, so dass spätestens hier die letzten Kühl- und Schmiermittelreste gefangen und zu den Ablaufkanälen gefördert werden.

Es hat sich bewährt, dass als Dichtungselement mindestens ein Radialwellendichtring verwendet wird, dessen Dichtlippe mindestens ein umlaufendes Federelement aufweist, welches die Dichtungslippe gegen die Dichtfläche vorzuspannen vermag. Derartige Radialwellendichtringe sind im Maschinenbau übliche Dichtungselemente, die keine aufwendige Form aufweisen und damit günstig zu erstellen sind. Von Vorteil ist, wenn zwei identische Dichtringe hintereinander angeordnet werden, so dass mit Sicherheit ausgeschlossen werden kann, dass Öl aus dem Lagerbereich in den Labyrinthbereich gelangen kann.

Zweckmäßig ist, wenn zwischen den beiden Radialwellendichtringen ein Zu- und Ablauf zur Schmierung der zweiten Dichtungslippe sowie zum Ableiten überflüssigen Öls vorgesehen ist.

Die Erfindung wird anhand einer Zeichnung näher erläutert.

Dabei zeigen:
- Fig.1: den Ausschnitt einer Walze mit Ölfilmlager und
- Fig. 2: eine Detailansicht des Dichtungsbereichs.

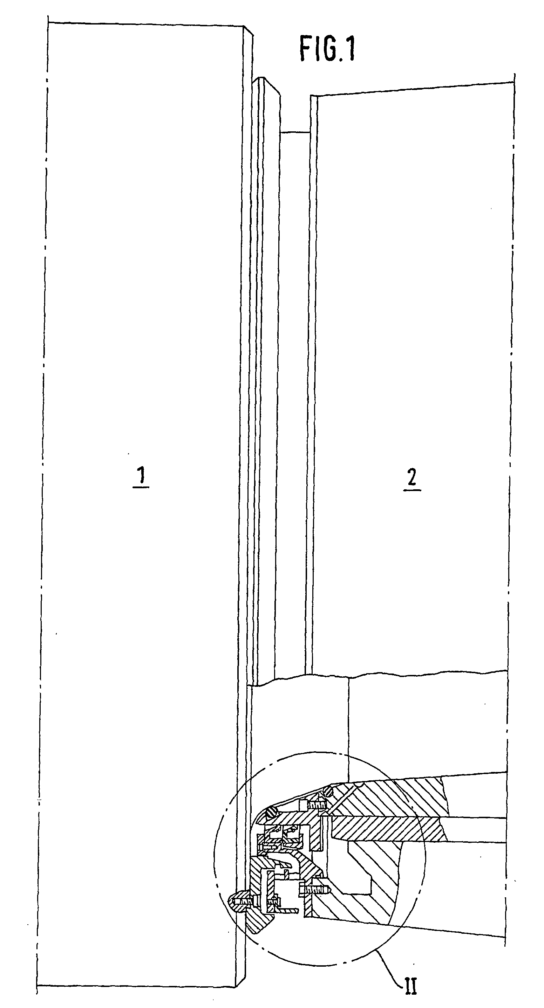

Der Figur 1 ist eine Walze 1 zu entnehmen, die einen Walzenzapfen 2 aufweist. Auf dem Walzenzapfen 2 ist die Zapfenbuchse 3 mit einer Zapfenbuchsenverlängerung 4 gezeigt. Weiterhin ist ein Teil des Einbaustücks 5 sowie die Lagerbuchse 6 dargestellt. An der Stirnseite der Walze 1 ist ein C-förmig ausgebildeter Ring 7 mittels Schrauben 8 gedichtet befestigt. In die C-förmige Öffnung des C-förmigen Rings 7 ragt ein ringförmiger Abschlussdeckel 9, der an dem Einbaustück 5 befestigt ist. Der ringförmige Abschlußdeckel 8 bildet eine ringförmige, nach außen offene Abflussnut 30 aus. Am ringförmigen Abschlussdekkel 9 ist ein Fortsatz 10 angeordnet.

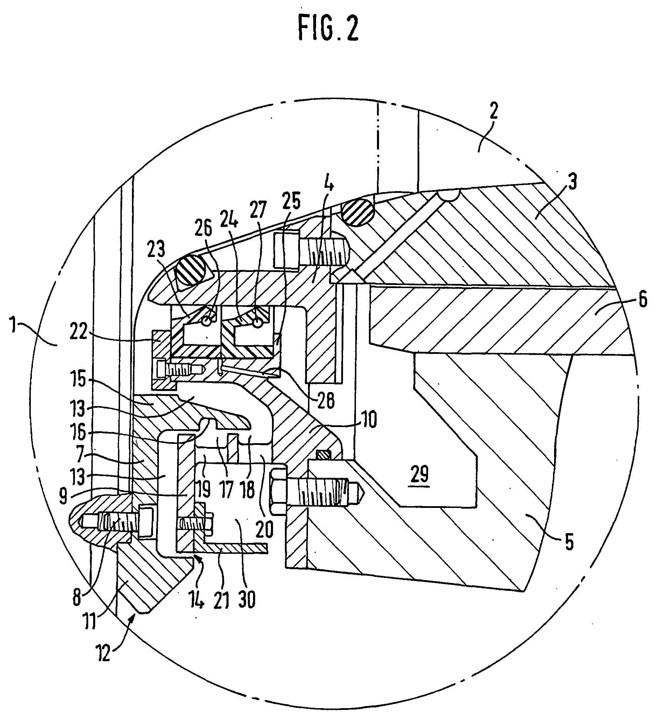

Figur 2 zeigt, dass der äußere Schenkel 11 des C-förmigen Rings 7 nach außen einen dachförmigen Abweiser 12 aufweist. Der dachförmige Abweiser 12 sorgt dafür, dass sich an der Dachspitze, wo die größte Umfangsgeschwindigkeit herrscht, das von der Walze 1 abfließende Kühl- und Schmiermedium sammelt und von der Dachspitze fortgeschleudert wird. Im übrigen wird das Kühl- und Schmiermedium im wesentlichen in der Abflussnut 30 gesammelt und von dieser abgeführt, so dass es nicht in das Labyrinth 13 gelangen kann.

Kühl- und Schmiermittelreste können dennoch durch die Öffnung 14 in das Labyrinth 13 gelangen. Kommen diese Tröpfchen mit dem rotierenden C-förmigen Ring 7 in Berührung, so wird dieser die Tröpfchen mitnehmen und durch die Fliehkraft zum äußeren Schenkel 11 transportieren, so dass die Tröpfchen aus der Öffnung 14 das Labyrinth verlassen können.

Setzen sich die Tröpfchen im Labyrinth 13 jedoch an dem ringförmigen Abschlussdeckel 9 ab, so werden diese an diesem Deckel nach unten laufen und je nach dem wo sie sich befinden, entweder auf den äußeren Schenkel 11 oder den inneren Schenkel 15 des C-förmigen Rings 7 tropfen. Von hier werden die Tropfen wiederum aufgrund der Fliehkräfte aus der Öffnung 14 gefördert.

Kühl- und Schmiermittelreste, die noch weiter in das Labyrinth 13 eindringen, werden im Anschluss vom inneren Schenkel 15 gefangen, welcher eine Nut 16 aufweist. An den Kanten der Nut bzw. in der Nut können sich Tröpfchen sammeln, die von den Kanten der Nut wiederum durch die Zentrifugalkraft in Ablaufkanäle 17, 18 geschleudert werden. Die Ablaufkanäle 17, 18 sind in den ringförmigen Abschlussdeckel 9 eingeformt. Im in Figur 2 gezeigten unteren Bereich weisen die Ablaufkanäle 17, 18 Öffnungen 19, 20 auf, aus denen das in den Kanälen 17, 18 gesammelte Kühl- und Schmiermittel das Labyrinth 13 zur Abflussnut 30 hin verlassen kann.

Damit in die Öffnungen 19, 20 kein Kühl- bzw. Schmiermittel von außen eindringen kann, ist im Bereich der Öffnung 19, 20 am ringförmigen Abschlussdekkel 9 ein Spritzschutz 21 vorgesehen, der die Abflussnut 30 im Bereich der Öffnungen 19, 20 abschottet.

Sollten sich an der Spitze des inneren Schenkels 15 des C-förmigen Rings 7 noch immer Kühl- und Schmiermittelreste befinden, werden diese vom Fortsatz 10 umgelenkt. Die dabei am Fortsatz 10 haften bleibenden Tröpfchen fließen an der Innenwand des Fortsatzes 10 in den Ablaufkanal 18. Weitere Kühl- und Schmiermitteltröpfchen können sich auf dem äußeren Bereich des inneren Schenkels 15 ablagern, wo sie bewirkt durch die Verjüngung des Innenschenkels 15 und die Fliehkräfte wiederum an die Spitze des inneren Schenkels 15 transportiert und von dort in den Ablaufkanal 18 geschleudert werden.

An der Spitze des Fortsatzes 10 ist ein ringförmiger Ansatz 22 anschraubbar, der einerseits das Labyrinth 13 stark verengt und der andererseits dazu dient, Dichtungselemente 23, 24 gegen einen Anschlag 25 zu pressen und damit die Dichtringe auf dem Fortsatz 10 festzusetzen. Bei den Dichtungselementen 23, 24 handelt es sich um Radialwellendichtringe, die über Federelemente 26, 27 gegen die Zapfenbuchsenverlängerung 4, vorgespannt sind. Im Fortsatz 10 ist ein Zu- und Ablaufkanal 28 vorgesehen, der im Bereich zwischen den beiden Dichtungselementen 23, 24 endet und hier Öl zur Schmierung der Dichtlippen des Dichtungselementes 23 zufördert bzw. überschüssig anstehendes Öl aus dem Dichtungsbereich in den Ölsumpf 29 abfördern kann.

### Bezugszeichenübersicht

- 1: Walze
- 2: Walzenzapfen
- 3: Zapfenbuchse
- 4: Zapfenbuchsenverlängerung
- 5: Einbaustück
- 6: Lagerbuchse
- 7: C-förmiger Ring
- 8: Schrauben
- 9: Ringförmiger Abschlussdeckel
- 10: Fortsatz
- 11: Äußerer Schenkel
- 12: Dachförmiger Abweiser
- 13: Labyrinth
- 14: Öffnung
- 15: Innerer Schenkel
- 16: Nut
- 17: Ablaufkanal
- 18: Ablaufkanal
- 19: Öffnung
- 20: Öffnung
- 21: Spritzschutz
- 22: Ansatz
- 23: Dichtungselement
- 24: Dichtungselement
- 25: Anschlag
- 26: Federelement
- 27: Federelement
- 28: Zu- und Ablaufkanal
- 29: Ölsumpf
- 30: Abflussnut

## Patentansprüche

1. Dichtungsvorrichtung für Lager einer Walze (1), die Walzenzapfen (2) und einen Walzenballen aufweist, bei welcher ein drehfest mit dem Walzenzapfen (2) verbindbarer Ringansatz eine ringförmige Dichtfläche trägt, mit der ein elastisches, stationäres Dichtungselement (23, 24) zusammenwirkt, **dadurch gekennzeichnet dass** dem Dichtungselement (23, 24) im eingebauten Zustand zum Walzenballen hin ein Dichtungslabyrinth (13) vorgeordnet ist, das einerseits aus stationären und andererseits aus mit der Walze (1) durch einen im Schnitt im wesentlichen C-förmig ausgebildeten, mit der Stirnseite der Walze (1) gedichtet verbindbaren Ring (7) besteht,
wobei in die C-förmige Öffnung des Ringes (7) ein stationärer, ringförmiger Abschlussdeckel (9) eintaucht,
wobei der ringförmige Abschlussdeckel (9) außenseitig, und nach außen offen eine Abflussnut (30) aufweist,
wobei die Labyrinth-Öffnung (14) vom Boden der Abflussnut (30) entfernt angeordnet ist,
wobei der ringförmige Abschlussdeckel (9) einen Fortsatz (10) aufweist, dessen Außenseite eine Umlenkung des Labyrinthweges bewirkt und dessen Innenseite eine Halterung für das stationäre Dichtungselement (23, 24) aufweist.
wobei der innere Schenkel (15) des C-förmigen Ringes (7) auf seiner dem mindestens einen innenliegenden und nach innen offenen Ablaufkanal (17, 18) aufweisenden ringförmigen Abschlussdeckel (9) zugewandten Seite eine gegenüberliegende Nut (16) aufweist,
wobei der innere Schenkel (15) des C-förmigen Rings (7) an seiner, dem Fortsatz (10) zugewandten Seite angeschrägt ist, so dass sich der innere Schenkel (15) zu seiner freien Spitze hin verjüngt, und
wobei der Fortsatz (10) an seinem Ende einen das Labyrinth (13) verengenden Ansatz (22) aufweist.

2. Dichtungsvorrichtung nach Anspruch 1,
**dadurch gekennzeichnet,**
**dass** der C-förmige Ring (7) im eingebauten Zustand einen der Walzenoberfläche zugewandten dachförmigen Abweiser (12) besitzt.

3. Dichtungsvorrichtung nach Anspruch 1 oder 2,
**dadurch gekennzeichnet,**
**dass** der Ablaufkanal (17, 18) an seiner tiefsten Stelle eine zur Abflussnut (30) des ringförmigen Abschlussdeckels (9) verlaufende Auslass-Öffnung (19, 20) besitzt.

4. Dichtungsvorrichtung nach Anspruch 3,
**dadurch gekennzeichnet,**
**dass** zwei Ablaufkanäle (17, 18) nebeneinander angeordnet sind.

5. Dichtungsvorrichtung nach Anspruch 3 oder 4,
**dadurch gekennzeichnet,**
**dass** im Bereich der Öffnungen (19, 20) an der Außenseite des ringförmigen Abschlussdeckels (9) ein Spritzschutz (21) vorgesehen ist.

6. Dichtungsvorrichtung nach einem der Ansprüche 1 bis 5,
**dadurch gekennzeichnet,**
**dass** das Dichtungselement (23, 24) zwischen dem Ansatz (22) und einem am Fortsatz (10) angeordneten Anschlag (25) festlegbar ist.

7. Dichtungsvorrichtung nach einem der Ansprüche 1 bis 6,
**dadurch gekennzeichnet,**
**dass** als Dichtungselement (23, 24) mindestens ein Radialwellendichtring vorgesehen ist, dessen Dichtlippe mindestens ein umlaufendes Federelement (26, 27) aufweist, welches die Dichtungslippe gegen die Dichtfläche des Ringansatzes (4) vorzuspannen Vermag.

8. Dichtungsvorrichtung nach Anspruch 7,
**dadurch gekennzeichnet,**
**dass** als Dichtungselement (23, 24) zwei Radialwellendichtringe nebeneinander vorgesehen sind und dass zwischen den Radialwellendichtringen ein Zu- und Ablaufkanal (28) vorgesehen ist.

9. Dichtungsvorrichtung nach Anspruch 8,
**dadurch gekennzeichnet,**
**dass** der Zu- und Ablaufkanal (28) so ausgebildet ist, dass über ihn nur eine geringe Schmiermittelmenge in den Raum zwischen die beiden Dichtungselemente (23, 24) gelangen kann, die ausreicht, die Dichtungslippe des Dichtungselements (23) zu schmieren, und dass der Zu- und Ablaufkanal (28) überschüssiges Öl abzuführen vermag.

## Claims

1. Sealing device for bearings of a roll (1), which has roll pins (2) and a roll circumferential surface, in which an annular projection connectible with the roll pin (2) to be secure against relative rotation carries an annular sealing surface with which a resilient, stationary sealing element (23, 24) co-operates, **characterised in that** arranged upstream of the sealing element (23, 24) in the installed state and towards the roll circumferential surface is a sealing labyrinth (13) which consists on the one hand of stationary ... and on the other hand of ... with the roll (1) by a ring (7) which is of substantially C-shaped construction in section and is sealingly connectible with the end face of the roll (1), wherein a stationary, annular closure cover (9) enters into the C-shaped opening of the ring (7), wherein the annular closure cover (9) has at the outer side an outflow groove (30) which is open outwardly, wherein the labyrinth opening (14) is arranged remote from the base of the outflow groove (30), wherein the annular closure cover (9) has a extension (10), the outer side of which produces a deflection of the labyrinth path and the inner side of which has a mount for the stationary sealing element (23, 24), wherein the inner limb (15) of the C-shaped ring (7) has an oppositely disposed groove (16) on its side facing the annular closure cover (9) which has at least one internally disposed and an inwardly open outflow channel (17, 18), wherein the inner limb (15) of the C-shaped ring (7) is chamfered at its side facing the extension (10) so that the inner limb (15) tapers towards its free tip and wherein the extension (10) has at its end an attachment (22) narrowing the labyrinth (13).

2. Sealing device according to claim 1, **characterised in that** the C-shaped ring (7) in the installed state has a roof-shaped deflector (12) facing the roll surface.

3. Sealing device according to claim 1 or 2, **characterised in that** the outflow channel (17, 18) has at its deepest point an outlet opening (19, 20) extending towards the outflow groove (30) of the annular closure cover (9).

4. Sealing device according to claim 3, **characterised in that** two outflow channels (17, 18) are arranged adjacent to one another.

5. Sealing device according to claim 3 or 4, **characterised in that** a spray protection means (21) is provided in the region of the openings (19, 20) at the outer side of the annular closure cover (9).

6. Sealing device according to one of claims 1 to 5, **characterised in that** the sealing element (23, 24) can be fixed between the attachment (22) and an abutment (25) arranged at the extension (10).

7. Sealing device according to one of claims 1 to 6, **characterised in that** provided as sealing element (23, 24) is at least one radial shaft sealing ring, the sealing lip of which has at least one encircling spring element (26, 27) which is capable of biasing the sealing lip against the sealing surface of the annular attachment (4).

8. Sealing device according to claim 7, **characterised in that** two radial shaft sealing rings are provided adjacent to one another as sealing element (23, 24) and that an inflow and outflow channel (28) is provided between the radial shaft sealing rings.

9. Sealing device according to claim 8, **characterised in that** the inflow and outflow channel (28) is so formed that by way thereof there can pass into the space between the two sealing elements (23, 24) only such a small lubricant quantity as is sufficient to lubricate the sealing lip of the sealing element (23) and that the inflow and outflow channel (28) is capable of conducting away excess oil.

## Revendications

1. Dispositif d'étanchéité pour des paliers d'un cylindre (1), qui présente des tourillons (2) de cylindre et une table de cylindre, dans lequel un embout annulaire, pouvant être raccordé au tourillon (2) de cylindre de manière à ne plus tourner, présente une surface d'étanchéité annulaire, avec laquelle interagit un élément d'étanchéité (23, 24) élastique stationnaire, **caractérisé en ce que** l'élément d'étanchéité (23, 24) est précédé, à l'état monté, vers la table de cylindre, d'un labyrinthe d'étanchéité (13), qui est constitué d'une part par des pièces stationnaires et d'autre part par un anneau (7) ayant, en coupe, une forme essentiellement en forme de C, pouvant être raccordé de manière étanche avec la face frontale du cylindre (1),
un couvercle de fermeture (9) stationnaire annulaire s'avançant dans l'ouverture en forme de C de l'anneau (7),
le couvercle de fermeture (9) annulaire présentant, à l'extérieur et ouverte vers l'extérieur, une rainure d'évacuation (30),
l'ouverture (14) du labyrinthe étant disposée en étant éloignée du fond de la rainure d'évacuation (30),
le couvercle de fermeture (9) annulaire présentant un prolongement (10) dont le côté externe provoque une déviation du parcours du labyrinthe et dont le côté interne présente un dispositif de fixation pour l'élément d'étanchéité stationnaire (23, 24),
la branche intérieure (15) de l'anneau en forme de C (7) présentant, sur son côté orienté vers le couvercle de fermeture (9) annulaire qui présente au moins un canal d'évacuation (17, 18) interne et ouvert vers l'intérieur, une rainure opposée (16),
la branche intérieure (15) de l'anneau en forme de C (7) étant en biais sur son côté orienté vers le prolongement de telle manière que la branche intérieure (15) se rétrécit vers sa pointe libre et
le prolongement (10) présentant en son extrémité un épaulement (22) rétrécissant le labyrinthe (13).

2. Dispositif d'étanchéité selon la revendication 1, **caractérisé en ce que** l'anneau en forme de C (7) présente, à l'état monté, un bourrelet (12) en forme de toit orienté vers la surface du cylindre.

3. Dispositif d'étanchéité selon la revendication 1 ou 2, **caractérisé en ce que** le canal d'évacuation (17, 18) présente, en son endroit le plus profond, une ouverture d'évacuation (19, 20) s'étendant vers la rainure d'évacuation (30) du couvercle de fermeture (9) annulaire.

4. Dispositif d'étanchéité selon la revendication 3, **caractérisé en ce que** deux canaux d'évacuation (17, 18) sont disposés l'un à côté de l'autre.

5. Dispositif d'étanchéité selon la revendication 3 ou 4, **caractérisé en ce qu'**on a prévu, au niveau des ouvertures (19, 20), sur le côté externe du couvercle de fermeture (9) annulaire, une protection (21) contre les pulvérisations.

6. Dispositif d'étanchéité selon l'une quelconque des revendications 1 à 5, **caractérisé en ce que** l'élément d'étanchéité (23, 24) peut être fixé entre l'embout (22) et une butée (25) disposée sur le prolongement (10).

7. Dispositif d'étanchéité selon l'une quelconque des revendications 1 à 6, **caractérisé en ce qu'**on a prévu, comme élément d'étanchéité (23, 24), au moins un joint annulaire à ondulations radiales, dont la lèvre d'étanchéité présente au moins un élément à ressort périphérique (26, 27), qui tend au préalable la lèvre d'étanchéité contre la surface d'étanchéité de l'embout annulaire (4).

8. Dispositif d'étanchéité selon la revendication 7, **caractérisé en ce qu'**on a prévu comme élément d'étanchéité (23, 24) deux joints annulaires à ondulations radiales l'un à côté de l'autre et **en ce qu'**on a prévu entre les joints annulaires à ondulations radiales un canal d'alimentation et d'évacuation (28).

9. Dispositif d'étanchéité selon la revendication 8, **caractérisé en ce que** le canal d'alimentation et d'évacuation (28) est réalisé de manière à ne permettre l'arrivée via celui-ci que d'une petite quantité de lubrifiant dans l'espace entre les deux éléments d'étanchéité (26, 24), qui suffit pour lubrifier la lèvre d'étanchéité (23) et **en ce que** le canal d'alimentation et d'évacuation (28) peut évacuer l'huile en excès.
